Europäisches Patentamt

European Patent Office

Office européen des brevets

(11) Publication number: 0 247 330
A2

(12) **EUROPEAN PATENT APPLICATION**

(21) Application number: 87104892.2

(51) Int. Cl.⁴: **B60B 7/06**

(22) Date of filing: 02.04.87

(30) Priority: 26.05.86 IT 2198486

(43) Date of publication of application:
02.12.87 Bulletin 87/49

(84) Designated Contracting States:
AT BE CH DE ES FR GB GR LI LU NL SE

(71) Applicant: SACEX S.p.A.
Corso Europa 12
I-20122 Milano(IT)

(72) Inventor: Bellu' Mario
Via Parini, 23
I-20038 Seregno (Province of Milano)(IT)

(74) Representative: Modiano, Guido et al
MODIANO, JOSIF, PISANTY & STAUB
Modiano & Associati Via Meravigli, 16
I-20123 Milan(IT)

(54) Wheel hub cover, particularly for automotive vehicle wheels.

(57) The wheel hub cover comprises a central portion wherefrom extends an annular band (4), arranged coaxially with respect to the central portion and having radially projecting tooth-like elements (10,11) rigidly associated therewith. The tooth-like elements (10,11) are adapted for snap-together coupling with a groove (12) provided on the wheel hub (13). An annular element (21) is provided which engages with the tooth-like elements (10,11) to push them elastically outwards.

Fig.3

EP 0 247 330 A2

## WHEEL HUB COVER, PARTICULARLY FOR AUTOMOTIVE VEHICLE WHEELS

The present invention relates to a wheel hub cover,particularly for automotive vehicle wheels.

As is known, wheel hub covers are currently available on the market which may be applied to the central outer part of a wheel hub, and which are substantially composed of a central portion, that can be provided with any desired aesthetic pattern. The central part connects to a lateral border or band having a cylindrical shape and radial coupling projections which allow one to effect the snap-together coupling with a groove usually provided on the wheel hub.

This embodiment, though it has proved to be valid from many points of view, in some cases has the disadvantage of not allowing a stable coupling, since in the course of time the projections may lose the elasticity which allows their radial divarication which effects the snap-together coupling, with the groove provided on the wheel hub.

This disadvantage causes the coupling of the wheel hub cover to be short-lasting, with the possibility of accidental uncoupling of the wheel hub cover.

The aim proposed by the present invention is indeed to eliminate the above described disadvantages by providing a new type of wheel hub cover for automotive vehicle wheels which allows the possibility of always effecting a stable snap-together coupling between the wheel hub cover and the wheel hub without the danger of a reduction in the outward elastic radial thrust exerted by the snap-together connecting elements.

Within the scope of this aim, a particular object of the invention is to provide a wheel hub cover which allows the possibility of being applied very quickly and simply to the wheel hub itself, furthermore having the advantage of preventing the rotation of the wheel hub cover with respect to the wheel hub.

Still another object of the present invention is to provide a wheel hub cover which is very quick and simple to assemble and which furthermore is capable of giving the greatest assurances of reliability and safety in use.

A not least object of the present invention is to provide a structure of a wheel hub cover which can be easily manufactured from elements and materials commonly available on the market and which is furthermore advantageous from a merely economical point of view.

The above described aim, as well as the objects mentioned and others which will become apparent hereinafter, are achieved by a wheel hub cover particularly for automotive vehicle wheels, according to the invention, comprising a central portion,wherefrom extends an annular band, arranged coaxially with respect to said central portion, characterized in that it comprises tooth-like elements projecting radially from said annular band and adapted for snap-together coupling with a groove provided on the wheel hub, an annular element being furthermore provided which engages with said tooth-like elements to push or thrust them elastically outwards.

Further characteristics and advantages will become apparent from the detailed description of a wheel hub cover particularly for automotive vehicle wheels illustrated only by way of non-limitative example in the accompanying drawing, wherein:

Fig. 1 is a schematic exploded perspective view of a wheel hub cover seen from the inside;

Fig. 2 is an enlarged scale view of the detail of the coupling between tooth-like elements and annular element;

Fig. 3 is a schematic view of the coupling phase between the wheel hub cover and the wheel hub; and

Fig. 4 is a cross section view of the coupling between the wheel hub cover and the wheel hub.

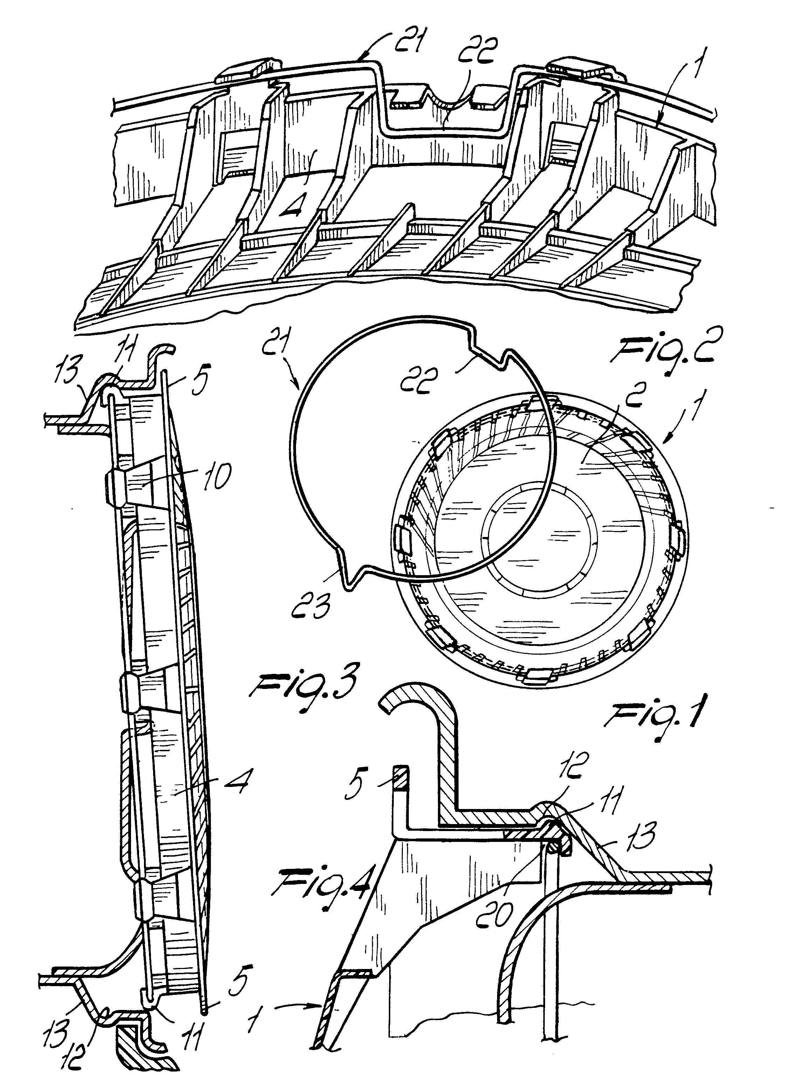

With reference to the above described figures, the structure of a wheel hub cover, particularly for automotive vehicle wheels, according to the invention, which is generally indicated with the reference numeral 1, comprises a central portion 2 which is substantially circular and may be provided with any graphic representation or configuration whatever, such as to alter the aesthetic appearance of the outer surface of the central portion 2 which will be in view.

From the central portion 2, substantially at its periphery, an annular band 4 extends which is advantageously separated from the central part 2 by an outer annular border, indicated with the reference numeral 5.

The peculiarity of the invention resides in the fact that on the annular band 4, which has a substantially cylindrical extension coaxial to the central position 2, tooth-like elements are provided, indicated by the reference numeral 10, which project radially with respect to the band 4 due to the presence of a radial projection, indicated by the reference numeral 11.

The radial projection 11 is inserted, in a snap-together manner into a groove 12 which is usually provided on the hub, generally indicated by the reference numeral 13.

The peculiarity of the invention resides in the fact that the tooth-like elements 10, in their inner part, define a recess 20 in which an annular element 21 can be accommodated, which has the function of exerting an elastic radial thrust towards the outside, so as to elastically push the teeth 10, at the projection 11, to make the coupling between the wheel hub cover 1 and the groove 12 more stable and safe.

In order to allow a certain elasticity of the annular element 21, which allows its radial contraction at the moment of the snap-together coupling of the wheel hub cover to the wheel hub, a bend or shoulder 22 is provided on the annular extension of the annular element 21; the bend 22 is also intended to allow the avoidance of the region affected by the valve of the tyre applied to the wheel hub cover.

Advantageously, in order to increase the characteristics of elasticity of the radial contraction and divarication of the annular element 21, a second bend or shoulder 23 is provided which is advantageously arranged diametrically opposite with respect to the first bend 22.

The annular element 21 may advantageously be manufactured in metal rod, bent to assume the desired shape.

The presence of the annular element 21 is very important, since, in engaging with the tooth-like elements 10, it pushes the same outwards with a relatively strong elastic biasing action so as to always afford a precise and stable coupling.

From what has been described, it can thus be seen that the invention achieves the intended aims and in particular the fact is stressed that the elasticity of the snap-together coupling is not assigned exclusively to the intrinsic elasticity of the plastic material used to provide the wheel hub cover, as is found in the solutions of the prior art, but to the presence of the annular element, which, by cooperating with the tooth-like elements which may be advantageously provided monolithically or enbloc with the wheel hub cover, is capable of imparting a high radial thrust which always keeps the coupling stable and safe.

Furthermore, with the described solution, the contact between the wheel hub cover and the wheel hub only occurs at the projections 11 of the tooth-like elements, i.e. there is a coupling between the material, for example plastic, composing the wheel hub cover, and the material such as metal composing the wheel hub, which prevents noise and vibrations, even though it may have an elastic thrust imparted by a metallic element, i.e. by a metallic annular element 21.

In practice, the materials employed, as long as compatible with the specific use, as well as the dimensions and the contingent shapes, may be any according to the requirements.

## Claims

1. A wheel hub cover, particularly for automotive vehicle wheels, comprising a central portion wherefrom extends an annular band, arranged coaxially with respect to said central portion, characterized in that it comprises tooth-like elements (10) projecting radially from said annular band (4) and adapted for snap-together coupling with a groove (12) provided on the wheel hub (13), an annular element (21) being furthermore provided which engages with said tooth-like elements (10) to push them elastically outwards.

2. A wheel hub cover, particularly for automotive vehicle wheels, according to the preceding claim, characterized in that said tooth-like elements (10) have a projection (11), provided at their outer portion and adapted to be coupled with said groove (12).

3. A wheel hub cover, particularly for automotive vehicle wheels, according to the preceding claims, characterized in that said tooth-like elements (10) are provided, at their inner part, at the level of said projection (11), with a recess (20) in which said annular element (21) can be at least partially accommodated.

4. A wheel hub cover, particularly for automotive vehicle wheels, according to one or more of the preceding claims, characterized in that said annular element (21) is provided with at least one first bend (22) adapted for imparting elasticity to the radial contraction of said annular element (21).

5. A wheel hub cover, particularly for automotive vehicle wheels, according to one or more of the preceding claims, characterized in that said annular element (21) has a second bend (23) arranged substantially diametrically opposite with respect to said first bend (22).

Fig.1

Fig.2

Fig.3

Fig.4